# EUROPEAN PATENT SPECIFICATION

(11) **EP 3 232 804 B1**
(45) Date of publication and mention of the grant of the patent: **01.09.2021**
(21) Application number: 15871256.2
(22) Date of filing: 18.12.2015
(51) Int. Cl.: A23G 3/20

(54) **CHEWY CONFECTIONERY CYLINDERS**
ZYLINDER AUS ZÄHEM SÜSSWARENPRODUKT
CYLINDRES DE CONFISERIE À MÂCHER

(30) Priority: 19.12.2014 US 201462094690 P
(43) Date of publication of application: 25.10.2017
(73) Proprietor: Wm. Wrigley Jr. Company, Chicago, IL 60642 (US)
(72) Inventor: BARTZ, Raechel, Chicago, Illinois 60642 (US); BIZYS, Egidijus, Chicago, Illinois 60642 (US); GLICKEN, Julia, Chicago, Illinois 60642 (US); MUSCAT, Ashley, Chicago, Illinois 60642 (US); MALDONADO, Valerie, Chicago, Illinois 60642 (US); WU, Xiaojun, Chicago, Illinois 60642 (US)
(74) Representative: Haseltine Lake Kempner LLP
(86) International application number: PCT/US2015/066938
(87) International publication number: WO 2016/100947

(56) References cited:
- WO-A1-02/056698
- WO-A1-2004/084649
- WO-A2-2008/048881
- GB-A- 2 367 736
- RU-C1- 2 391 854
- US-A- 1 072 338
- US-A- 4 853 236
- US-A1- 2005 064 087
- US-A1- 2006 029 708
- US-A1- 2006 257 549
- US-A1- 2007 160 707
- US-A1- 2014 220 188
- US-A1- 2014 220 188
- None

## Description

### FIELD OF THE INVENTION

The present invention relates to a chewy confectionery product.

### BACKGROUND ART

Chewy confectionery products are enjoyed by many consumers in several different forms. Chewy confectionery products are produced in different shapes and sizes. These shapes include squares, circles, ovals, and sticks. Texturizing agents help a chewy confectionery product keep its form/shape. Many of these different shaped chewy confectionery products are made of traditional texturizing agents such as gelatin, starch, and egg white (albumin). Some of these chewy confectionery products, namely licorice, use wheat flour as the texturizing agent.

There has been an increasing desire for companies to create products which use ingredients that can appeal to a larger population - including people that have allergies to certain ingredients and people that do not eat ingredients derived from animal products. Despite the increasing demand for such products not many chewy confectionery products exist that do not either contain an animal derived product or one that can cause an allergic reaction to those with a gluten sensitivity. Though starch is a possible gluten free and animal product free ingredient products made of starch do not hold their shape well as they experience cold flow thus deforming the intended shape of the product over time. Processing time for starch can also be quite lengthy making manufacture of starch based products not ideal.

US 2007/0160707 A1 is directed towards a multiple phase confectionery article having a confectionery substrate in contact with a stabilized gel component.

GB 2367 736 A relates to a food product comprising a substantially transparent gelatin-free water-based hydrocolloid casing enclosing a solid, liquid, soft or particulate centre.

WO 2004/084649 A1 provides a food product comprising a gelled water-based shell and a liquid centre characterized in that the water-based shell contains a mixture of kappa carrageenan and iota carrageenan in an amount sufficient to provide a gel texture, the relative proportions of kappa carrageenan to iota carrageenan being 50 to 95% by weight kappa carrageenan and 5 to 50% by weight iota carrageenan based on the sum of the weights of kappa and iota carrageenan.

WO 2008/048881 A2 provides an apparatus and method for producing a multiple phase confectionery article that includes a first confectionery material and a second confectionery material. The second confectionery material forms a pattern in the first confectionery material.

US 2014/220188 A1 is directed to a chewy confectionery product which eliminates the need for traditional texturizing agents in the product formulation. The product contains pectin and has a low water content compared to traditional chewy confectionery products.

WO 02/056698 A1 discloses a system and process for making a center-filled candy product, the candy product being filled with both a middle layer of hard or chewy material and a center layer (core) of a semi-liquid type material.

US 2005/064087 A1 provides a multi-piece food product comprising an edible material made from a mixture of at least 20% sweetener, at least 15% starchy material, and at least 1% of fruit based on a total dry weight of the mixture.

US 4 853 236 A discloses dual texture or composite food articles which exhibit extended shelf life stability namely, structural stability, in that the two phases remain distinct during shelf life. The food articles comprise a food portion, preferably exterior, comprising a solid, relatively tougher food portion. The articles additionally essentially comprise a second fluid portion, preferably interior, in direct physical contact with the first portion, without the necessary presence of an intermediate barrier as a separate, distinct element.

US 1 072 338 A discloses a stick candy consisting of a core of peanut butter having a quantity of soft candy uniformly incorporated throughout its mass to give it body, and having an exterior protective coating of pulled candy.

RU 2 391 854 C1 relates to methods including preparation of a pectin-containing mixture by kneading pectin components and sugar in water until complete dissolution of pectin.

### BRIEF DESCRIPTION

The present invention is defined in and by the appended claims. The present disclosure is directed towards a chewy confectionery product in a cylindrical shape which is substantially free of traditional texturizing agents or wheat flour and is able to retain its cylindrical shape.

The chewy confectionery product of the present invention is substantially free of traditional texturizing agents (gelatin, starch, or egg white (albumin)) or wheat flour, yet it is able to retain its shape in the form of a cylinder. The chewy confectionery product of the present invention contains at least 0.2% pectin. In an embodiment of the present invention the chewy confectionery product has a water content of 3 to 13 percent by weight.

In an embodiment the chewy confectionery product can be a tube with a hole/void in the middle which runs the entire length of the tube. In another embodiment the hole/void can be filled with a different confectionery product. In another embodiment the outside of the tube/cylinder may contain ridges. These ridges can be swirled around the length of the tube/cylinder or run straight down the length of the tub/cylinder. The confectionery product of the present invention may have two or more colors swirled around the product. The confectionery product of the present invention may also be one or more flavors.

### BRIEF DESCRIPTION OF THE DRAWINGS

FIG. 1 depicts examples of the chewy confectionery product with different colors swirled around the length of the product.
FIG. 2 depicts examples of two colors swirled the entire length of the chewy confectionery product at different proportions - 1:1 and 7:3.
FIG. 3 depicts examples of the chewy confectionery product containing two colors. In one example the color is swirled around the entire length of the confectionery product in the second example the two colors simply run the entire length down the confectionery product.
FIG. 4 depicts the ridges on the chewy confectionery product. In one example the ridges are swirled around the entire length of the chewy confectionery product. In the other example the ridges run the length of the chewy confectionery product without a swirl.
FIG. 5 depicts the cross-section of the chewy confectionery product. In one example the center of the chewy confectionery product is hollow and in the other example it is not hollow.

### DETAILED DESCRIPTION

### Definitions

The present specification provides certain definitions related to the compositions, methods, and systems disclosed. Provision, or lack of the provision, of a definition for a particular term or phrase is not meant to imply any particular importance, or lack thereof. Rather, and unless otherwise noted, terms are to be understood according to conventional usage by those of ordinary skill in the relevant art.

Reference throughout the specification to "one embodiment" or "an embodiment" means that a particular feature, structure, or characteristic described in connection with an embodiment is included in at least one embodiment. Thus, the appearance of the phrases, "in one embodiment" or "in an embodiment," in various places throughout the specification is not necessarily referring to the same embodiment. Further, the particular features, structures, or characteristics may be combined in any suitable manner in one or more embodiments.

The present application contemplates the possibility of omitting any components or steps listed herein. The present application further contemplates the omission of any components or steps even though they are not expressly named as included or excluded in the specification.

As used herein, "comprising" and "comprises" denote the presence of a feature, step, or component without excluding the possibility of additional features, steps, or components being present as well.

As used herein "chewy confectionery" means a confectionery product which is

As used herein "traditional chewy confectionery" means a confectionery product containing starch, gelatin, or egg white (albumin) as a texturizing agent.

As used herein "cold flow" is defined as the distortion, deformation, or dimensional change which takes place in a material under ambient conditions and pressures with an inability to return to its original dimensions.

As used herein "substantially free" means that the product has no intentional addition of the particular ingredient or ingredients and that that the ingredient or ingredients do not contribute to the chewy consistency of the product. For example, a chewy confectionery product may be substantially free of starch if the starch is not being added to the chewy confectionery product directly as a texturizing but is still found in the product as a component/ingredient contained in a different ingredient such as color or flavor.

### Description

Edible products enjoyed by consumers include chewy confectionery products in different shapes and sizes. Typically traditional chewy confectionery products use starch, gelatin, or egg white (albumin) as the texturizing agent and to help the product retain its shape. Some chewy confectionery products, such as licorice, use wheat flour as the texturizing agent and to help retain the shape of the licorice sticks. In recent years there has been an increase in demand for products which do not contain animal derived ingredients and are not susceptible to allergies and food sensitivities to ingredients such as gluten. Starch is an alternative texturizing agent which is not animal derived or associated with food sensitivities; however, when starch is used as the primary and/or only texturizing agent in a chewy confectionery product the product does not hold its shape very well over time as it experiences cold flow and it takes a long time to process. Though starch may be a good alternative for some very simple shapes it would not allow for the chewy confectionery product of the current invention to hold its cylindrical shape.

Despite efforts to find/create a chewy confectionery product which satisfies these consumer demands while still retaining its shape and texture over a longer period, there are still limited selections in the chewy confectionery area. The selections currently offered may have limited shapes and sizes. The product of the current invention provides such a solution for consumers. The product of the current invention is a chewy confectionery product in a cylindrical shape that is substantially free of traditional texturizing agents (starch, gelatin, and albumin) and wheat, but is able to retain its shape for an extended period of time. A traditional texturizing agent or wheat may be contained in an ingredient of the chewy confectionery product, such as color or flavor, or it may be used in the chewy confectionery product as a processing aid, but starch, gelatin, albumin and wheat are not used as texturizing agents in the chewy confectionery product of the present invention.

The chewy confectionery product of the current invention contains a least 0.2 percent by weight, on a dry basis, of pectin. Pectin is a heterogeneous grouping of acidic structural polysaccharides found in fruit and vegetables and mainly prepared from 'waste' citrus peel and apple pomace. Pectin is produced commercially as a white to light brown powder and is used in food as a gelling agent. The pectin helps the chewy confectionery product of the present invention retain its shape without the use of traditional texturizing agents. Increasingly consumers are looking for products derived from natural sources with minimal modification - use of pectin also helps meet this consumer need.

In another embodiment the chewy confectionery product of the current invention has a low water content. The water content of the chewy confectionery product may be 3 to 13 percent by weight of the product, more preferably between 4 and 9 percent by weight of the chewy confectionery product, and most preferably between 5 and 8 percent by weight of the chewy confectionery product.

According to one embodiment of the present invention the chewy confectionery product is comprised of pectin and a sweetener. The sweetener may include, but is not limited to, any of a number of carbohydrates or sugar substitutes commonly found in confectionery products. Examples include the various sugars (for example monosaccharides such as glucose (dextrose), fructose and galactose and their polymers and disaccharides such as sucrose, maltose, lactose, and their polymers, etc.), the various types of glucose syrups (corn syrup, rice syrup, high maltose syrup, high fructose syrup, etc.), sugar alcohols (polyols) or other sugar substitutes, high intensity sweetener, natural or artificial sweetener, and combinations thereof. In one embodiment of the present invention the sweetener may include a crystallizing sweetener and a non-crystallizing sweetener. In one embodiment of the present invention the sweetener is a combination of sucrose and a glucose syrup. The sweetener may be present in the amount of 10 to 99.8 percent by weight on a dry basis of the chewy confectionery product, more preferably 70 to 99 percent by weight on a dry basis of the chewy confectionery product, and most preferably 80 to 95 percent by weight on a dry basis of the chewy confectionery product. In one embodiment of the present invention, where sucrose and a glucose syrup are being used as the sweetener, the sucrose can be present in the amount of 20 to 80 percent by weight on a dry basis of the chewy confectionery product, more preferably 50 to 70 percent by weight on a dry basis of the chewy confectionery product, and most preferably 60 to 65 percent by weight on a dry basis of the chewy confectionery product.

In another embodiment of the present invention the chewy confectionery product further contains fat. The fat may include, but is not limited to, any of a number of fats commonly used in confectionery products. Examples of such fats include but are not limited to dairy fats, modified and unmodified palm oil, palm kernel oil, coconut oil, soybean oil, and cottonseed oil. Fat may be added to the chewy confectionery product in the amount of 0.5 to 20 percent by weight on a dry basis of the chewy confectionery product, more preferably 1 to 8 percent by weight on a dry basis of the chewy confectionery, and most preferably 2 to 6 percent by weight on a dry basis of the chewy confectionery product.

In another embodiment of the present invention the chewy confectionery product may also include one or more additional ingredients traditionally used in the confectionery industry - these include but are not limited to other hydrocolloids (such as gum Arabic, xanthine gum, locust bean gum, gellan gum, carrageenan, and gum Arabic), acidulants, sensates, buffering agents, humectants, artificial and natural sweeteners, sugar alcohols, emulsifiers, flavor enhancers, proteins, artificial and natural flavors, essential oils, fruit juices, vegetable juices, colorings, and other commonly used confectionery ingredients. In another embodiment of the present invention vitamins, supplements, dairy (such as evaporated milk, concentrated milk, dry milk, whey, butter, cream, yogurt, buttermilk, etc.), fiber, nuts, or other similar ingredients can also be added to the chewy confectionery product.

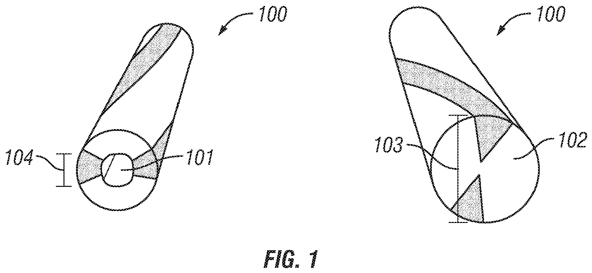

As can be seen in FIG. 1 through 4 the chewy confectionery product of the current invention is in the shape of a cylinder. As shown in FIG. 1 in one embodiment of the present invention the cylinder (100) has a hollow portion in the center of the cylinder (101). In another embodiment there is no hollow portion (102). In yet another embodiment of the present invention the cylinder may have a hollow portion in the center that is filled with an edible material. Such edible material may be in liquid, gel, solid, or powder form. Such edible material may include, but is not limited to, any non-chocolate confectionery material, supplements, vitamins, nutritional ingredients, minerals, herbal extracts, chocolate, sweeteners, acids, flavors, honey, chewing gum, juice, fruit, fruit extracts, milk products, and frozen confectionery. The hollow portion of the cylinder may be sealed on either or both ends in order to contain the edible material within the cylinder without spilling.

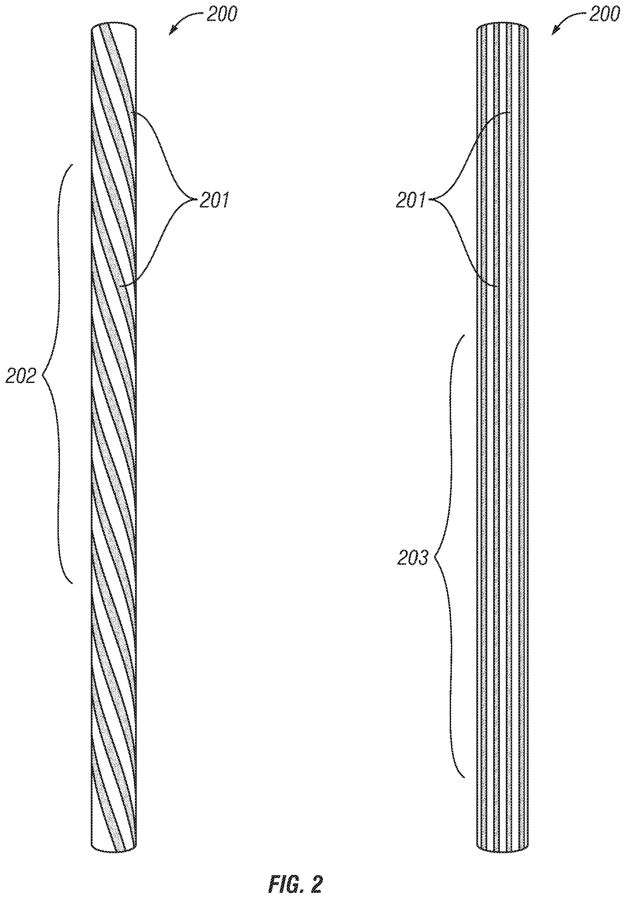

In another embodiment, as seen in FIG. 2, the chewy confectionery product has one or more ridges (201) on the outside of the cylinder. In one embodiment the ridges are swirled around the entire length of the outside of the product (202). In another embodiment the ridges run up and down the product (203). The ridges can be found along the entire length of the product or a portion of the product.

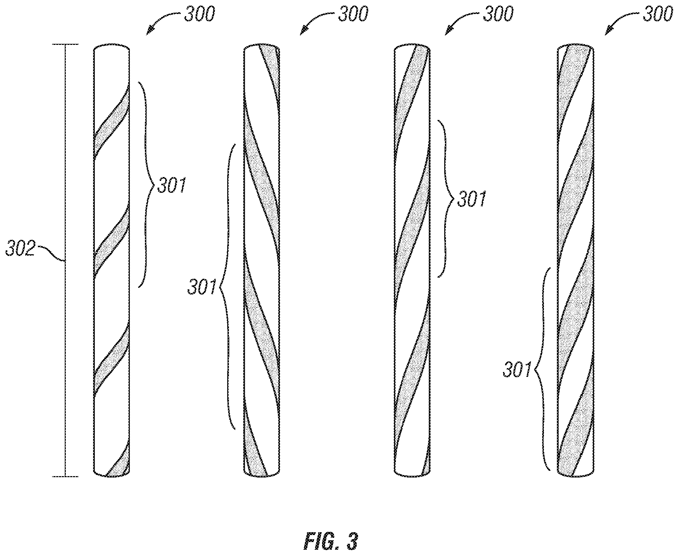

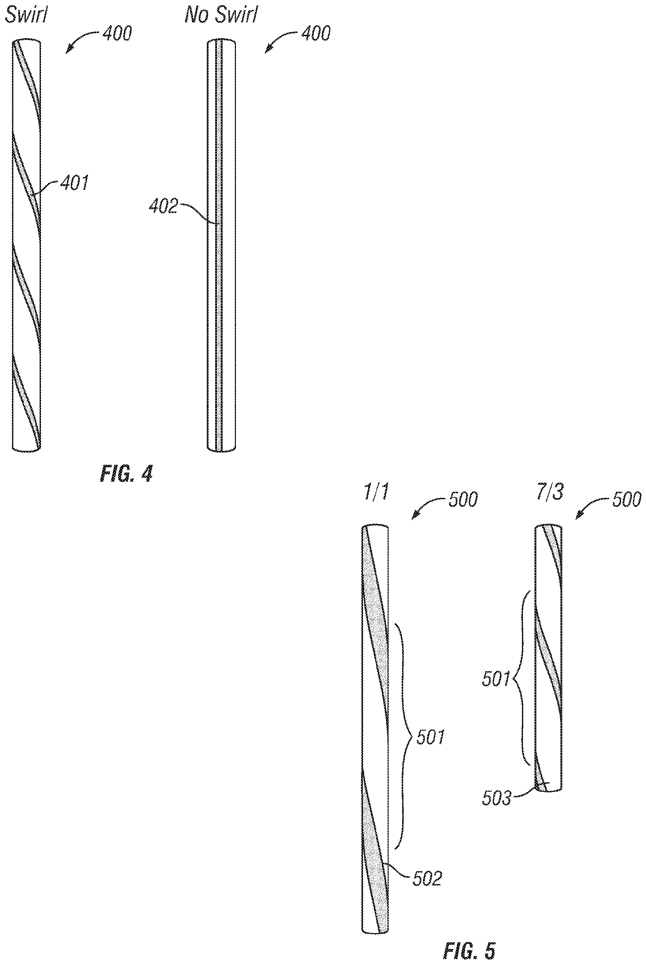

The chewy confectionery product of the current invention may contain one or more colors (as seen in FIG. 3 through FIG. 5). In one embodiment the entire length of the product is one color. In another embodiment the product has two or more colors (300, 400, and 500). The two or more colors may be different hues of the same color. The colors may be swirled around the entire length of the product or a portion of the product (301, 401, 501). The colors may also run in lines up and down the product length or portion of the product's length (402). If two colors are used their appearance may be varied by changing the proportion of the two colors to each other - for instance two colors may be present at a ratio of 1:1 to 10:1, more preferably 1:1 to 7:3. FIG. 5 depicts two colors swirled in a 1:1 ratio (502) and a 7:3 ratio (503).

The chewy confectionery product of the current invention may contain one or more flavors. In one embodiment the entire product is made up of one flavor. In another embodiment the product contains at least two flavors. The two or more flavors may be swirled together throughout the product - possibly one flavor associated with each color. When the product contains two or more flavors the flavors may be either mixed together to create a combined flavor profile or they may be in two or more distinct regions so that a consumer tastes only one flavor depending on the region of the product the consumer is tasting or consuming.

In another embodiment the chewy confectionery product of the current invention may also be coated, sanded, or polished/glazed. The coating can be a hard or soft coating. The coating may be comprised of sucrose-based ingredients, dextrose-based ingredients, sucrose-free ingredients, sugar alcohol ingredients, or combinations thereof. The coating can also be comprised of chocolate or other dairy or non-dairy fat based food approved ingredients. The chewy confectionery product can also be glazed or polished with food approved substances such as shellac. The coating can also be comprised of chocolate, yogurt, or other dairy or non-dairy fat based food approved ingredients. The chewy confectionery product can also be glazed or polished with food approved substances such as shellac or carnauba wax. The chewy confectionery product can also be sanded with sucrose-based ingredients, dextrose-based ingredients, sucrose-free ingredients, sugar alcohol ingredients, or combinations thereof.

In another embodiment of the present invention the length (302) of the confectionery may range from 1 centimeter to 40 centimeters, more preferable from 10 to 20 cm, and most preferably from 13 to 17 centimeters. In some embodiments the diameter of the cross section (103) of the chewy confectionery product of the present invention can range from 0 to 6 centimeters, preferably 0 to 2 centimeters, and most preferably 0 to 1.5 centimeters. If the cylinder has a hollow portion the diameter of the hollow portion (104) may range from 0 centimeters to 5 centimeters, preferably from 0 to 1 centimeter, and most preferably from 0 to 0.5 centimeters. The length to diameter ratio of the chewy confectionery product of the present invention can be from 40:1 to 1:1, more preferably 30:1 to 5:1 and most preferably from 25:1 to 15:1. The cross section of the cylinder can be in the shape of an oval, circle, lentil, ellipse, rounded triangle, rounded square or any other shape of a circular nature.

The chewy confectionery product of the present invention can be produced using any of several processes common to creating chewy confectionery products. An example of a typical process for creating a chewy confectionery product similar to that of the present invention entails mixing together and cooking the sweetener with water. Pectin is then mixed into the sweetener mixture. The pectin can be added pre or post-cooking. If added after cooking it may be pre-hydrated to improve its functionality. If adding fat the fat component can be mixed in after the pectin is added or before it is added. Depending on the equipment being used, the fat component may be added at any stage of the production process and not just immediately after or before the pectin is added. Flavor, color, acid, and other confectionery ingredients could be mixed in at the very end to prevent degradation. The product may or may not be grained. It is then cooled, extruded, and then wrapped if necessary. In various other embodiments the product can be molded or deposited.

In accordance with various embodiments of the current invention the chewy confectionery product may be aerated during processing or formation. The chewy confectionery product may be aerated by pulling, whipping air into the product, incorporating foaming agents, or using other aerating methods depending on the final desired texture of the product.

Specific embodiments will now be demonstrated by reference to the following examples. It should be understood that the examples are disclosed solely for the purpose of illustration, and variations to these embodiments are anticipated.

### EXAMPLES

Below is an example of a formulation for the chewy confectionery product of the present invention:

| **Ingredient** | **Percentage** |
|---|---|
| Moisture | 6.2% |
| Sweetener | 87% |
| Fat | 3.3% |
| Acid | 1.5% |
| Pectin | 0.2% dry weight |
| Color | 0.05% |
| Flavor | 0.2% |

## Claims

1. A chewy confectionery product which is substantially free of gelatin, wheat, albumin, and starch wherein the chewy confectionery product is in the form of a cylinder, and comprised of at least 0.2 percent by weight on a dry basis of pectin

2. The chewy confectionery product of Claim 1 having a water content of 3 to 13 percent by weight.

3. The chewy confectionery product of claim 1 or claim 2, wherein the cylinder/tube has a hollow portion in the center.

4. The chewy confectionery product of claim 3 wherein the hollow portion is filled with an edible material.

5. The chew confectionery product of any of claims 1-4 wherein the cylinder has one or more ridges on the outside of the cylinder.

6. The chewy confectionery product of Claim 5 wherein the ridges swirl around the entire length of the chewy confectionery product.

7. The chewy confectionery product of any of claims 1-6 having at least two colors

8. The chewy confectionery product of Claim 7 where the two colors are swirled together the entire length of the chewy candy.

9. The chewy confectionery product of any of claims 1-8 having at least two flavors.

10. The chewy confectionery product of Claim 9 wherein each flavor is associated with a different color found on the chewy confectionery product.

## Patentansprüche

1. Zähes Süßwarenprodukt, das weitestgehend frei von Gelatine, Weizen, Albumin und Stärke ist und wobei das zähe Süßwarenprodukt in Form eines Zylinders ist und aus mindestens 0,2 Gew.-%, bezogen auf das Trockengewicht, Pectin besteht.

2. Zähes Süßwarenprodukt nach Anspruch 1, das einen Wassergehalt von 3 bis 13 Gew.-% aufweist.

3. Zähes Süßwarenprodukt nach Anspruch 1 oder Anspruch 2, wobei der Zylinder/das Rohr in der Mitte einen hohlen Abschnitt aufweist.

4. Zähes Süßwarenprodukt nach Anspruch 3, wobei der hohle Abschnitt mit einem essbaren Material gefüllt ist.

5. Zähes Süßwarenprodukt nach einem der Ansprüche 1-4, wobei der Zylinder eine oder mehrere Erhebungen auf der Außenseite des Zylinders aufweist.

6. Zähes Süßwarenprodukt nach Anspruch 5, wobei die Erhebungen über die gesamte Länge des zähen Süßwarenprodukts wirbelartig herum verlaufen.

7. Zähes Süßwarenprodukt nach einem der Ansprüche 1-6, das mindestens zwei Farben aufweist.

8. Zähes Süßwarenprodukt nach Anspruch 7, wobei die zwei Farben über die gesamte Länge des zähen Süßwarenprodukts wirbelartig miteinander verschlungen sind.

9. Zähes Süßwarenprodukt nach einem der Ansprüche 1-8, das mindestens zwei Geschmacksrichtungen aufweist.

10. Zähes Süßwarenprodukt nach Anspruch 9, wobei jede Geschmacksrichtung jeweils mit einer anderen sich auf dem zähen Süßwarenprodukt befindlichen Farbe assoziiert ist.

## Revendications

1. Produit de confiserie à mâcher qui est sensiblement exempt de gélatine, de blé, d'albumine, et d'amidon, le produit de confiserie à mâcher étant sous la forme d'un cylindre, et composé d'au moins 0,2 pour cent en poids, sur une base sèche, de pectine.

2. Produit de confiserie à mâcher selon la revendication 1 possédant une teneur en eau de 3 à 13 pour cent en poids.

3. Produit de confiserie à mâcher selon la revendication 1 ou la revendication 2, le cylindre/tube possédant une partie creuse dans le centre.

4. Produit de confiserie à mâcher selon la revendication 3, la partie creuse étant remplie avec une matière comestible.

5. Produit de confiserie à mâcher selon l'une quelconque des revendications 1 à 4, le cylindre possédant une ou plusieurs nervures sur l'extérieur du cylindre.

6. Produit de confiserie à mâcher selon la revendication 5, les nervures tournoyant autour de la longueur entière du produit de confiserie à mâcher.

7. Produit de confiserie à mâcher selon l'une quelconque des revendications 1 à 6 possédant au moins deux couleurs.

8. Produit de confiserie à mâcher selon la revendication 7 où les deux couleurs sont tourbillonnées ensemble sur la longueur entière de la confiserie à mâcher.

9. Produit de confiserie à mâcher selon l'une quelconque des revendications 1 à 8 possédant au moins deux arômes.

10. Produit de confiserie à mâcher selon la revendication 9, chaque arôme étant associé à une couleur différente trouvée sur le produit de confiserie à mâcher.
